# EUROPÄISCHE PATENTSCHRIFT

(11) **EP 2 190 779 B1**
(45) Veröffentlichungstag und Bekanntmachung des Hinweises auf die Patenterteilung: **19.10.2011**
(21) Anmeldenummer: 08785764.5
(22) Anmeldetag: 30.08.2008
(51) Int. Cl.: C01B 3/58, C10J 3/84

(54) **VERWENDUNG EINES PULVERFÖRMIGEN ÜBERGANGSMETALLOXIDS ALS KATALYSATOR**
USE OF A POWDER TRANSITION METAL OXIDE AS A CATALYST
OXYDE DE MÉTAL DE TRANSITION PULVÉRULENT ET SON UTILISATION COMME CATALYSEUR

(30) Priorität: 25.09.2007 DE 102007045665
(43) Veröffentlichungstag der Anmeldung: 02.06.2010
(73) Patentinhaber: Karlsruher Institut für Technologie, 76131 Karlsruhe (DE)
(72) Erfinder: SEIFERT, Helmut, 67069 Ludwigshafen (DE); HORNUNG, Andreas, 76185 Karlsruhe (DE); HERRMANN, Sonja, Verena, 64285 Darmstadt (DE); VOGEL, Herbert, 64569 Nauheim (DE); DROCHNER, Alfons, 65239 Hochheim (DE)
(86) Internationale Anmeldenummer: PCT/EP2008/007110
(87) Internationale Veröffentlichungsnummer: WO 2009/039938

(56) Entgegenhaltungen:
- US-A- 4 046 523
- JUUTILAINEN ET AL: "Zirconia: Selective oxidation catalyst for removal of tar and ammonia from biomass gasification gas" APPLIED CATALYSIS B: ENVIRONMENTAL, ELSEVIER, Bd. 62, Nr. 1-2, 10. Januar 2006 (2006-01-10), Seiten 86-92, XP005215022 ISSN: 0926-3373
- SRINAKRUANG ET AL: "Highly efficient sulfur and coking resistance catalysts for tar gasification with steam" FUEL, IPC SCIENCE AND TECHNOLOGY PRESS, GUILDFORD, GB, Bd. 85, Nr. 17-18, 1. Dezember 2006 (2006-12-01), Seiten 2419-2426, XP005586729 ISSN: 0016-2361
- S.M. RICHARDSON AND M. R. GRAY: "Enhancement of Residue Hydroprocessing Catalysts by Doping with Alkali Metals" ENERGY & FUELS, Bd. 11, Nr. 6, 19. November 1997 (1997-11-19), Seiten 1119-1126, XP002507603
- ABU EL-RUB Z ET AL: "Review of catalysts for tar elimination in biomass gasification processes" INDUSTRIAL AND ENGINEERING CHEMISTRY RESEARCH 20041027 AMERICAN CHEMICAL SOCIETY US,, Bd. 43, Nr. 22, 27. Oktober 2004 (2004-10-27), Seiten 6911-6919, XP002497044 [gefunden am 2004-09-25]

## Beschreibung

Die Erfindung betrifft eine Verwendung eines pulverförmigen Übergangsmetallmischoxids als Oxidkatalysator zur selektiven Oxidation von Teersubstanzen in Synthesegasen mit molekularem Sauerstoff sowie ein Verfahren zur selektiven Entfernung von Teersubstanzen aus Synthesegasen gemäß des ersten bzw. achten Patentanspruchs.

Synthesegase im vorgenannten Sinne sind Gase, wie sie beispielsweise in der Vergasung (Partikeloxidation unter Zugabe von Sauerstoff oder Wasserdampf) von organischen kohlenstoffhaltigen Einsatzstoffen zunächst als Rohsynthesegase anfallen. Sie enthalten anorganische Reduktionsmittel wie CO und H₂ und dienen als Synthesebausteine z.B. für die Herstellung von Methanol oder Kohlenwasserstoffen.

Teersubstanzen im vorgenannten Sinne umfassen gemäß [1] die Gesamtheit aller organischen Verbindungen mit Ausnahme der gasförmigen Kohlenwasserstoffe (C1 bis C6) in einem Synthesegas, das bei einer Vergasung von kohlenstoffhaltigen Materialien anfällt.

Bei der Herstellung von Synthesegas aus kohlenstoffhaltigen, d.h. organischen Einsatzstoffen wie Erdöl- oder Kohleprodukte oder Biomasse mittels Vergasung entstehen neben dem gewünschten Synthesegas je nach Prozessbedingungen unterschiedliche Mengen an Teersubstanzen der vorgenannten Art in unterschiedlicher Zusammensetzungen. Diese Teersubstanzen stören sowohl bei einer weiterführenden Verarbeitung oder Nutzung des Synthesegases beispielsweise in Methanol- oder Fischer-Tropsch-Anlagen oder auch bei der direkten Befeuerung von Wärmekraftmaschinen wie z.B. in Blockheizkraftwerken (BHKW) und müssen daher entfernt werden.
Teersubstanzen im Synthesegas neigen zudem zu einer unerwünschten Kondensation in Leitungen oder sonstigen Anlageteilen wie Förderpumpen oder Ventilen. Dies führt zu allmählicher Verstopfung und damit zu kostenintensiven Nutzungseinschränkungen und -unterbrechungen. Sie deaktivieren die Katalysatoren durch Fouling (Belegen der katalytisch aktiven Oberflächen) bei den nachfolgenden Synthesestufen.

Insbesondere heterogene kohlenstoffhaltige Einsatzstoffe wie Biomasse führen bei einer Vergasung zu einer vergleichsweise hohen Teerbeladung im Synthesegas. Deshalb strebt man bereits bei der Entstehung des Synthesegases, d.h. bei der Vergasung eine Reduzierung der Teerbildungsrate an. Adäquate Maßnahmen umfassen dabei eine Beeinflussung der Reaktionskinetik bei der Vergasung durch Katalysatoreinsatz im Vergaser, konstruktive Maßnahmen an den Vergasungsvorrichtungen sowie auch eine Prozessoptimierung durch eine entsprechende Parameterwahl.

Eine Homogenisierung des Zustroms der Einsatzstoffe, die zu einer Reduzierung der Teerbildung führen könnte, erfordert zusätzliche Verfahrensschritte und ist damit unwirtschaftlich. Auch eine Anhebung der Vergasungstemperatur führt zwar zu einer geringeren Teerbildungsrate, aber auch zu einem erhöhten Energiebedarf bei der Vergasung.

Oftmals sind die vorgenannten Maßnahmen zur Vermeidung der Teerbildung während der Vergasung für einen gewünschten Maximalanteil an Teer im Synthesegas allein nicht ausreichend. Je nach Nutzung des Synthesegases sind die Anforderungen an die Reinheit sehr unterschiedlich. Während bei der direkten Nutzung des Synthesegases als Brennstoff z.B. in einer Gasturbine Teergehalte von bis zu 5 mg/Nm³ und mehr tolerierbar sind, liegt die maximal zulässige Obergrenze des Teergehalts bei der einer Zuführung des Synthesegases zu einer veredelnden Methanolsynthese charakteristischerweise typischerweise bei 1 mg/Nm³.

Folglich ist man bestrebt, die Teersubstanzen in Synthesegasen nach einer Vergasung zu entfernen oder unschädlich zu machen.

Häufig kommen hierbei aufwendige und teure physikalische Methoden wie Wäscher oder Elektrofilter zum Einsatz. Dabei sind verschiedene Bauarten bekannt, wie z.B. Wäschertürme, Rotationswäscher, Prallwäscher oder Venturiwäscher. Das am häufigsten eingesetzte Lösungsmittel ist Wasser, wobei sich jedoch nur Restteergehalte von minimal 20-40 mg/Nm³ erzielen lassen [17].

In [17] wird z.B. ein Wäschersystem für Rohsynthesegas beschrieben, bei dem durch den Einsatz von Ölen als Lösungsmittel ein minimaler Restteergehalt auf 10 mg/Nm3 verringert werden.

Ferner ist aus [3] ein Verfahren bekannt, bei dem ein organisches Lösungsmittel bei Temperaturen oberhalb des Siedepunktes von Wasser (100°C) eingesetzt wird.

Die genannten physikalischen Methoden sind jedoch für einen großtechnischen Einsatz wegen der anfallenden teerhaltigen Abflussmengen umweltbelastend und oftmals nicht wirtschaftlich. Nachteilig ist außerdem ein Energieverlust aufgrund einer erforderlichen Abkühlung und Entspannung des Rohsynthesegases für die Abreinigung.

Dies gilt grundsätzlich auch für eine Teerabscheidung mittels Elektrofilter. Sie bieten zwar den Vorteil einer Kombination von Teer- und Partikelabscheidung, lassen sich jedoch (wie die Gaswäsche) nur für kalte entspannte Synthesegase einsetzten [2].

Eine weitere Möglichkeit der Teerentfernung aus dem abgekühlten Rohsynthesegas bietet eine Abscheidung mit Filterelementen [5], wobei sich die Abreinigung des Filtermediums jedoch häufig als problematisch erweist.

Ferner zeigt [4] einen zusammenfassenden Überblick über gängige Verfahren zur Teerentfernung.

Bei einer in [4] erwähnten thermischen Entfernung des Teers im heißen Rohsynthesegas sind jedoch Temperaturen von über 1000°C erforderlich [6], was die Wirtschaftlichkeit des Vergasungsprozesses beeinträchtigen könnte.

Die katalytische Teerentfernung erfolgt ebenfalls im heißen Rohsynthesegas, zumeist durch Reformierungsreaktionen an verschiedenen Katalysatormaterialien. Sie ist sowohl an aus Biomasse erzeugten Rohgasen als auch an Modellgasen mit verschiedenen Katalysatorsystemen untersucht worden. Zum Einsatz kommen nichtmetallische teilweise dabei auch vorbehandelte Katalysatoren wie Dolomit [7, 8, 13, 14], Olivin [9] und Kalkspat oder Metallkatalysatoren wie Platin und Ruthenium sowie Katalysatoren auf Nickelbasis [10, 11] unter Zugabe von Promotoren (Molybdän und Kobalt), wie sie auch in der Petrochemie als Reformierkatalysatoren Verwendung finden. Es befinden sich außerdem katalytisch wirkende Filter auf Basis von Nickel in der Entwicklung [12].

Nichtmetallischen Katalysatoren [13, 14] sind zwar kostengünstig, jedoch sehr empfindlich gegenüber Verunreinigungen und stellen aufgrund ihrer geringen Standzeit ein Entsorgungsproblem dar. Bei Verwendung von den vorgenannten Gesteinsmaterialien [7-9] haben bereits geringe Abweichungen in der Mineralzusammensetzung eine deutliche Veränderung der katalytischen Aktivität zur Folge. Metallkatalysatoren sind dagegen aktiver und mechanisch stabiler aber vergleichsweise teuer. Beide genannten Katalysatortypen sind jedoch erst oberhalb Temperaturen von 800-900 °C effizient wirksam, d.h. erst dann sind mit ihnen die erforderlichen Reaktionsumsätze von über 99% erzielbar.

Weiterhin ist eine Teerentfernung mittels katalytischer Teeroxidation bekannt (vgl. [15-16]). Hierfür gibt es erste erfolgreich getestete Materialien. In [15] wird Zirkon als aktives Katalysatormaterial für die oxidative Teerentfernung im Temperaturbereich von 550-800°C beschrieben. Die Erprobung fand bisher jedoch nur mit der Modellsubstanz Toluol statt [15]. Bei der Verwendung von Palladium als aktivem Katalysatormaterial wurden bei 700 °c und unter Luftzugabe von 0,07 mg/Nm³ Rohgas Abbauraten von 98 % erreicht [16], diese Temperatur ist allerdings immer noch von der gewünschten entfernt, zudem ist Palladium ein sehr teures Material.

Davon ausgehend liegt die Aufgabe der Erfindung darin, ein Verfahren zur Entfernung von Teersubstanzen aus Rohsynthesegasen mittels Katalysator sowie die Verwendung eines Katalysators für diesen Zweck vorzuschlagen, welche die aus dem genannten Stand der Technik bekannten Einschränkungen nicht aufweisen, sich durch eine verbesserte Wirtschaftlichkeit auszeichnen und zudem eine verbesserte Selektivität bezüglich einer Totaloxidation auszeichnet. Die Aufgabe wird durch eine Verwendung und ein Verfahren mit den Merkmalen aus Anspruch 1 und 8 gelöst. Unteransprüche geben vorteilhafte Ausgestaltungen dieser Verwendung und des Verfahrens wieder. Wesentliches Merkmal der Erfindung umfasst eine Verwendung von Oxiden von einem oder mehreren Übergangsmetallen mit mindestens einer eingemischten basischen Substanz als Katalysator, mit dem vorhandene Teersubstanzen im Synthesegas selektiv mit molekularem Sauerstoff z.B. zu CO und/oder CO₂ und Wasser oxidiert werden, ohne dabei gleichzeitig die Hauptkomponenten des Synthesegas, CO und H₂, zu oxidieren. Die Vermischung der basischen Substanz mit den Oxiden erfolgt mit pulverförmigen Oxiden (Partikel), wobei die Mischung für die Verwendung nicht unbedingt partikelförmig vorliegen muss, sondern hierfür auch in andere Zustände wie Agglomerate oder Schalenkatalysatoren weiterverarbeitet und eingesetzt werden kann. Die basischen Substanzen zeichnen sich durch eine chemische Stabilität während der Oxidation (Temperaturen zwischen 200 und 650°C, bevorzugt zwischen 400 und 500°C, Mischoxide und Carbonat sind allein temperaturstabil, vermischt ist Natriumcarbonat mit dem Mischoxid nur bis ca. 520 °C stabil) aus. Durch eine Behandlung eines Übergangsmetalloxidkatalysators mit basischen Substanzen wie beispielsweise bevorzugt durch Einmischen von Carbonaten eines Alkali- oder Übergangsmetalls (Zugabe basischer Substanzen wie z.B. Alkali- oder Erdalkalicarbonate oder Oxide) erweitert sich das Selektivitätsspektrum vorgenannter Oxidation vorteilhaft von den Teersubstanzen zu Totaloxidationsprodukten CO₂ und H₂O, d.h. ohne eine Partialoxidation zu Zwischenprodukte wie Phthalsäureanhydrid (PSA, C₈H₄O₃) oder Maleinsäureanhydrid (MSA, C₂H₂O₃). Die basischen Substanzen dienen als Promotor für die Oxidation der Produkte. Sie binden diese verstärkt an die Katalysatoroberfläche und verhindern eine Desorption, wodurch eine weiterführende Totaloxidation der Zwischenprodukte begünstigt wird. Ebenso besteht ein wesentliches Merkmal des Verfahrens zur selektiven Entfernung von Teersubstanzen aus Synthesegasen, umfassend eine selektive Oxidation der Teersubstanzen mit molekularem Sauerstoff, in der Verwendung eines Übergangsmetalloxids zusammen mit vorgenannten basischen Substanzen als Katalysator. Vorzugsweise enthält der Übergangsmetalloxidkatalysator Vanadiumoxid, in einer weiteren bevorzugten Ausführung zusätzlich Molybdänoxid. Vanadiumoxid bewirkt in vorteilhafter Weise eine Oxidation der Teermodellkomponente Naphthalin, während Molybdänoxid die Selektivität bezüglich der Teermodellkomponente erhöht, so dass eine Oxidation von Wasserstoff und Kohlenmonoxid vollständig oder nahezu vermieden wird. In einer weiter bevorzugten Ausführungsform besteht der Übergangsoxidkatalysator aus Oxiden aus dem System Molybdän/Vanadium/Wolfram. Wolframoxide bewirken in vorteilhafter Weise eine Stabilisierung der Struktur und ermöglichen damit den Einsatz im gewünschten Temperaturfenster. In einer besonders bevorzugten Ausführung weist Mo/V/W-Oxidkatalysator ein molares Verhältnis der Elemente Molybdän, Vanadium und Wolfram von 7,5 bis 8,5 zu 1 bis 3 zu 0,1 bis 2, weiter bevorzugt von 8 zu 2 zu 1 auf. Mischoxide vom Typ Mo/V/W-Oxid sind als Katalysator für die partielle Oxidation von Acrolein C₂H₃CHO zu Acrylsäure C₃H₄O₂ bereits bekannt. Bei Versuchen stellte sich aber überraschenderweise heraus, dass diese Katalysatoren sich nicht nur für die Oxidation von Acrolein eignen, sondern auch für die gewünschte selektive Oxidation der vorgenannten Teersubstanzen im Synthesegas. Besonders vorteilhaft dabei ist, dass das Synthesegas, insbesondere die darin enthaltenen starken aber anorganischen Reduktionsmittel CO und H₂ chemisch nicht verändert werden. Die vorteilhafte Wirkung der Übergangsmetalloxidkatalysator wie die genannten Mo/V/W-Mischoxide beruht auf deren Vermögen, molekularen Sauerstoff in Form von Sauerstoffionen wie O²⁻ aus einer Gasphase zu binden. Die Sauerstoffionen werden selektiv an organische Moleküle wie Acrolein und Teersubstanzen abgegeben, um diese katalytisch zu oxidieren. Die vorgenannte Sauerstoffspezies kann somit nicht von dem Synthesegas, insbesondere den darin enthaltenen CO- und H₂-Bestandteilen aufgenommen werden. Folglich findet im Synthesegas auch keine Oxidation von Synthesegasbestandteilen statt.

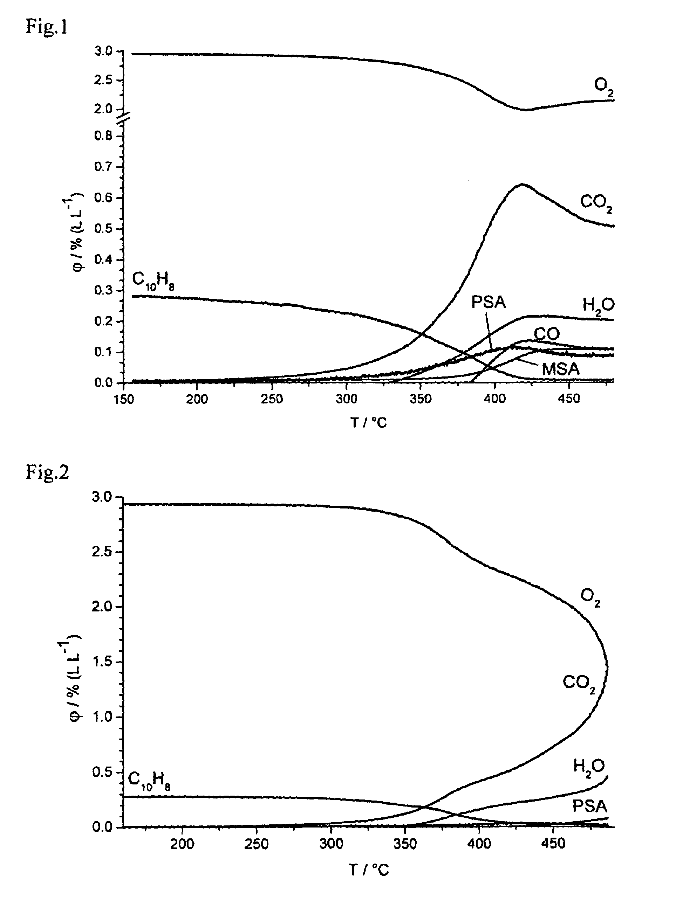

Die Erfindung wird im Folgenden anhand von Versuchsbeispielen mit den folgenden Figuren näher erläutert. Es zeigen
Fig.1 die Verläufe der Volumenanteile ϕ verschiedener Substanzen bei einer temperaturprogrammierten Reaktion von Naphthalin und Sauerstoff bei Verwendung eines Übergangsmetallkatalysators Mo₈V₂W₁Oₓ ohne basische Substanzen über verschiedene Temperaturen sowie
Fig.2 die mit Fig.1 direkt vergleichbaren Verläufe der Volumenanteile ϕ verschiedener Substanzen nach einer temperaturprogrammierten Reaktion von Naphthalin und Sauerstoff bei Verwendung eines Übergangsmetallkatalysators M_{O8}V₂W₁0ₓ mit Na₂CO₃ als basische Substanz entsprechend einem Natriumanteil bezogen auf das Mischoxid von 5 Gew.% über verschiedene Temperaturen.

### 1. Katalysatorherstellung

Für die Herstellung des Mo/V/W-Mischoxid-Katalysatormaterials werden Ammoniumheptamolybdat (NH₄)₆Mo₇O₂₄, Ammoniummetavanadat NH₄VO₃ und Ammoniummetawolframat (NH₄)₆H₂W₁₂O₄₁ als Ausgangsstoffe eingesetzt. Nach Einstellung eines gewünschten molaren Verhältnisses der Elemente Molybdän, Vanadium und Wolfram, vorzugsweise von 8 zu 2 zu 1, über eine Wahl der entsprechenden Mengenverhältnisse der vorgenannten Ausgangsmaterialien wird die Mischung in eine wässrige Lösung eingebracht(1,5 1 Wasser pro 45 g Feststoff), auf 90 min erwärmt (80 bis 90°C) und sprühgetrocknet (6 bar, Druckluft 12 ml/min Flüssigkeit, 275°C Heißluft), wobei sich eine pulverförmige Katalysatorvorstufe einstellt (Partikel mit Partikelgrößen zwischen 0,1 und 10 µm und mit röntgenamorpher Oberfläche bevorzugt ohne kristalline Anteile). In einem anschließenden Kalzinierungsschritt unter Stickstoffatmosphäre wird der partikelförmige Katalysator in einem mehrstündigen Temperaturprogramm (Aufheizung mit einer Aufheizrate 2 K/min auf 325°C, danach Haltezeit 240 min bei 325°C, danach weiteres Aufheizen mit 2 K/min auf 400°C, danach Haltezeit 10 min bei 400°C, danach Abkühlung) in eine bevorzugte aktive Form überführt.

Anschließend wird der gewünschte Anteil an basischer Substanz mechanisch in den pulverförmigen Katalysator eingemischt, vorzugsweise zwischen 1 und 20 Gew.%, weiter bevorzugt zwischen 2 und 10 Gew.% eines der vorgenannten Carbonate in Pulverform, im Rahmen des vorliegenden Ausführungsbeispiels 5 Gew.% Na₂CO₃ (Natriumgehalt bezogen auf das Mischoxid) in pulverförmiger Form.

Zur Reduzierung von Druckverlusten bei der Durchströmung der Katalysatorschüttung mit dem Reaktionsgasgemisch (Synthesegas) erfolgte eine Agglomeration der pulverförmigen Mischung. Dadurch wird eine zu hohe Pulverschüttdichte und damit ein zu hoher Druckverlust über die Schüttung des Katalysators bzw. der Mischung vermieden und die Zugänglichkeit des Synthesegases auf die gesamte Oberfläche des pulverförmigen Katalysators verbessert. Für die Agglomeration wird die Pulvermischung mit Glycerin angefeuchtet und anschließend im Trockenschrank bei 75°C unter Vakuum getrocknet. Im Rahmen des Ausführungsbeispiels erfolgte eine Abtrennung von Partikeln mit Durchmessern unterhalb 0,315 mm durch Sieben, sodass die Agglomerate aus Partikeln mit einen Durchmesserbereich zwischen 0,315 bis 1,5 mm bestanden.

### 2. Untersuchung der Katalysatoraktivität (vgl. Fig.1 und 2)

Die chemische Aktivität des Mo/V/W-Oxid-Katalysators ohne und mit eingemischter basischer Substanz (vgl. Fig.1 bzw. 2) wurde anhand von Experimenten in einem Strömungsrohrreaktor mit angekoppeltem Massenspektrometer untersucht. Vor Beginn des Versuches wurde der Katalysator und die Mischung aus Katalysator und basischer Substanz mit Sauerstoff vorbehandelt (Aufheizen mit 5K/min, dann 1h bei 400°C in einer Thermowaage im Strömungsrohrreaktor, Atmosphäre 1% Sauerstoff, 99% Argon).

Damit wird eine maximal mögliche Sauerstoffaufnahme im Katalysator erzielt. Während der folgenden temperaturprogrammierten Reaktion kann der auf der Katalysatoroberfläche vorliegende Sauerstoff eine Reaktion mit dem in der Gasphase vorliegenden Naphthalin eingehen. Der dabei am Katalysator verbrauchte Sauerstoff wird mit molekularem Sauerstoff aus der Gasphase ersetzt. Der Vorgang der Reduktion und darauf folgender Oxidation des Katalysators ist reversibel und kann daher beliebig oft durchgeführt werden. Nach der Reaktionsphase wird eine erneute Oxidationsphase bei 400°C durchgeführt (1h, 5% Sauerstoff in Argon). Diese dient dazu, vor einer weiteren Reaktionsphase wieder einen vollständig oxidierten Katalysator bereitzustellen und somit vergleichbare Bedingungen während der Reaktionsphasen zu gewährleisten. Es kann nun erneut eine temperaturprogrammierte Reaktionsphase durchgeführt werden. Da sich aufgrund von Einfahrvorgängen am Katalysator die erste Reaktionsphase von den folgenden unterscheidet, werden in Fig.1 und 2 sowie in den folgenden Versuchsbeschreibungen die Ergebnisse der jeweiligen zweiten Reaktionszyklen zugrunde gelegt.

Die in Fig.1 und 2 dargestellten Versuchsergebnisse wurden anhand eines Modellgases mit 0,25 Vol.% Naphthalin, 3 Vol.% Sauerstoff, einer Einwaage an Katalysatorsubstanz bzw. an vorgenannter Mischung aus Katalysator und basischer Substanz von 2 g und einem Gasvolumenstrom von 100 ml/min sowie bei 5 K/min Heizrate ermittelt. Das Naphthalin diente anstelle eines Teeres als definiertes und in seiner Wirkung bekanntes Modell-Reduktionsmittel zur Ermittlung der vorgenannten Versuchsergebnisses.

Bei der Reaktion des Naphthalin mit dem Sauerstoff wurde ab ca. 350°C ein deutlicher Anstieg der Oxidationsprodukte wie z.B. zu CO₂, CO und Wasser festgestellt (Fig.1 und 2), während die Konzentrationen von Sauerstoff und Naphthalin entsprechend abnahmen.

Fig.1 zeigt im Rahmen einer Verwendung eines Übergangsmetallkatalysators ohne basische Substanzen oberhalb 350°C zusätzlich zu den vorgenannten Konzentrationsänderungen einen Konzentrationsanstieg von Phthalsäureanhydrid (PSA, C₈H₄O₃) und Maleinsäureanhydrid (MSA, C₂H₂O₃). Dieser tritt in Fig.2, d.h. bei Verwendung einer Mischung aus Katalysator und basischer Substanz nicht auf; die Konzentration von Phthalsäureanhydrid und Maleinsäureanhydrid betrug auch bei Temperaturen oberhalb von 350°C nahezu Null.

### Literatur:

[1] DIN CEN15439 Biomassevergasung - Teer und Staub in Produktgasen - Probenahme und analytische Bestimmung; Deutsche Fassung CEN/TS 15439:2006
[2] Ullmann's Encyclopedia of industrial chemistry, Kapitel: Gas Production, Abschnitt 5.4.4: Removal of Gas Impurities of low concentration, 7. Auflage, online release, 2005
[3] Bandi A.: Gasreinigungsverfahren, Tagungsband Fachtagung "Regenerative Kraftstoffe" 124-129, Stuttgart, 2003
[4] Bolhar-Nordenkampf M.: Arbeitsbericht der Projektgemeinschaft Biomassevergasung - Hersteller und Marktbetrachtung der thermo-chemischen Umwandlung von Biomasse, www.hessenenergie.net, 2002
[5] Hasler P., Nussbaumer T.: Gas Cleaning for IC Engine Applications from fixed Bed Biomass Gasification, Biomass and Bioenergy 16 (1999) 385-395
[6] Jess A.: Reaktionskinetische Untersuchungen zur thermischen Zersetzung von Modellkohlenwasserstoffen, Erdöl Erdgas Kohle 111 (1995) 479-484
[7] Perez P., Aznar P.M., Caballero M.A., Gil J., Martin J.A., Corella, J.: Hot Gas Cleaning and Upgrading with Calcined Dolomite Located Downstream a Biomass Fluidized Bed Gasifier Operating with Steam -Oxygen Mixtures, Energy & Fuels 11 (1997) 1194-1203
[8] Simell P.A., Halala N.A.K., Haario H.E.: Catalytic Decomposition of Gasification Gas Tar with Benzene as Model Compound, Ind. Eng. Chem. Res. 36 (1997) 42-51
[9] Devi L., Ptasinski K.J., Janssen F.J.J.G.: Decomposition of naphthalene as a biomass Tar over Pretreated Olivine: Effect of Gas Composition, Kinetic Approach, and Reaction Scheme, Ind. Eng. Chem. Res. 44 (2005) 9096-9104
[10] Jess, A.: Catalytic upgrading of tarry fuel gases: A kinetic study with model components, Chem. Eng. Proc. 35 (1996) 487- - 494
[11] Dou B., Zhang M., Gao J., Shen W., Sha X.: High-Temperature Removal of NH3, Organic Sulphur, HCI, and tar Component from Coal-Derived Gas, Ind. Eng. Chem. Res. 41 (2002) 4195-4200
[12] Ma L., Verelst H., Baron G.V.: Integrated high Temperature Gas Cleaning: Tar Removal in biomass gasification with a catalytic filter, Catalysis Today 105 (2005) 729-734
[13] Myren C., Hörnell C., Bjömbom E., Sjöström K.: Catalytic Decomposition of Biomass Pyrolysis Gas with a Combination of Dolomite and Silica, Biomass and Bioenergy 23 (2002) 217-227
[14] Orio A., Corella J., Narvaez I.: Performance of Different dolomites on Hot Raw Gas Cleaning from Biomass Gasification with Air, Ind. Eng. Chem. Res. 36 (1997) 3800-3808
[15] Juutilainen S.J., Simell P.A., Krause A.O.I.: Zirconia: Selective oxidation catalyst for removal of for and ammonia from biomass gasification gas, Appl. Catalysis B: Environmental 62 (2006) 86-92
[16] Klemm M., Hiller A., Wilhelm R.: Gasmotorentaugliches Brenngas aus der Holzvergasung durch die Entteerung mittels partieller katalytischer Oxidation und Prozessoptimierung, Tagungsband DGMK-Fachbereichstagung "Energetische Nutzung von Biomassen" 195 - 202, Velen, 2004
[17] Analyse und Evaluierung der thermo-chemischen Vergasung von Biomasse; Schriftenreihe "Nachwachsende Rohstoffe" Band 29, Landwirtschaftsverlag GmbH (2006) insbes. S.81-88

## Patentansprüche

1. Verwendung von Übergangsmetalloxiden als Übergangsmetalloxidkatalysatoren zur selektiven Oxidation von Teersubstanzen in Synthesegasen mit molekularem Sauerstoff, wobei in den Übergangsmetalloxidkatalysator eine basische Substanz eingemischt ist.

2. Verwendung nach Anspruch 1, **dadurch gekennzeichnet, dass** der Übergangsmetalloxidkatalysator Vanadiumoxid enthält.

3. Verwendung nach Anspruch 2, **dadurch gekennzeichnet, dass** der Übergangsmetalloxidkatalysator Molybdänoxid enthält.

4. Verwendung nach einem der vorgenannten Ansprüche, **dadurch gekennzeichnet, dass** der Übergangsmetalloxidkatalysator ein Molybdän/Vanadium/Wolfram-Oxidkatalysator ist.

5. Verwendung nach Anspruch 4, **dadurch gekennzeichnet, dass** der Mo/V/W-Mischoxidkatalysator ein molares Verhältnis der Elemente Molybdän, Vanadium und Wolfram von 7,5 bis 8,5 zu 1 bis 3 zu 0,1 bis 2 aufweist.

6. Verwendung nach einem der vorgenannten Ansprüche, **dadurch gekennzeichnet, dass** die basische Substanz ein Carbonat eines Alkali- oder Übergangsmetalls ist.

7. Verwendung nach Anspruch 6, **dadurch gekennzeichnet, dass** das Carbonat Natriumcarbonat ist.

8. Verfahren zur selektiven Entfernung von Teersubstanzen in Synthesegasen, umfassend eine selektive Oxidation der Teersubstanzen mit molekularem Sauerstoff bei Verwendung eines pulverförmigen Übergangsmetall oxids als Übergangsmetalloxidkatalysator mit einer eingemischten basischen Substanz nach einem der vorgenann-ten Ansprüche.

9. Verfahren nach Anspruch 6, **dadurch gekennzeichnet, dass** die selektive Oxidation bei einer Temperatur zwischen 200 und 650°C erfolgt.

10. Verfahren nach Anspruch 7, **dadurch gekennzeichnet, dass** die selektive Oxidation bei einer Temperatur zwischen 400 und 500°C erfolgt.

## Claims

1. Use of transition metal oxides as transition metal oxide catalysts for the selective oxidation of tar substances in synthesis gases with molecular oxygen, wherein a basic substance is mixed into the transition metal oxide catalyst.

2. Use according to claim 1, **characterised in that** the transition metal oxide catalyst contains vanadium oxide.

3. Use according to claim 2, **characterised in that** the transition metal oxide catalyst contains molybdenum oxide.

4. Use according to one of the preceding claims, **characterised in that** the transition metal oxide catalyst is a molybdenum/vanadium/tungsten oxide catalyst.

5. Use according to claim 4, **characterised in that** the Mo/V/W mixed oxide catalyst has a molar ratio of the elements molybdenum, vanadium and tungsten of 7.5 to 8.5 : 1 to 3 : 0.1 to 2.

6. Use according to one of the preceding claims, **characterised in that** the basic substance is a carbonate of an alkali metal or transition metal.

7. Use according to claim 6, **characterised in that** the carbonate is sodium carbonate.

8. Method for the selective removal of tar substances in synthesis gases, comprising a selective oxidation of the tar substances with molecular oxygen using a powder transition metal oxide as the transition metal oxide catalyst with a mixed-in basic substance according to one of the preceding claims.

9. Method according to claim 6, **characterised in that** the selective oxidation takes place at a temperature between 200 and 650°C.

10. Method according to claim 7, **characterised in that** the selective oxidation takes place at a temperature between 400 and 500°C.

## Revendications

1. Utilisation d'oxydes de métaux de transition comme catalyseurs à oxydes de métaux de transition pour l'oxydation sélective de substances de type goudron contenues dans les gaz de synthèse, avec de l'oxygène moléculaire,
selon lequel on mélange une substance basique dans le catalyseur à oxydes de métaux de transition.

2. Utilisation selon la revendication 1,
**caractérisé en ce que**
le catalyseur à oxydes de métaux de transition contient de l'oxyde de vanadium.

3. Utilisation selon la revendication 2,
**caractérisé en ce que**
le catalyseur à oxydes de métaux de transition contient de l'oxyde de molybdène.

4. Utilisation selon l'une des revendications précédentes,
**caractérisé en ce que**
le catalyseur à oxydes de métaux de transition contient un catalyseur à oxydes de molybdène/vanadium/tungstène.

5. Utilisation selon la revendication 4,
**caractérisé en ce que**
le catalyseur à oxydes de mélange mo/v/w présente un rapport molaire des éléments molybdène, vanadium, tungstène tel que 7,5-8,5/1-3/0,1-2.

6. Utilisation selon l'une des revendications précédentes,
**caractérisé en ce que**
la substance basique est un carbonate d'un métal alcalin ou d'un métal de transition.

7. Utilisation selon la revendication 6,
**caractérisé en ce que**
le carbonate est du carbonate de sodium.

8. Procédé d'élimination sélective de substances goudronneuses dans des gaz de synthèse comprenant une oxydation sélective des substances de type goudron avec de l'oxygène moléculaire en utilisant un oxyde de métal de transition à l'état de poudre comme catalyseur à oxydes de métaux de transition avec une substance basique, mélangée selon l'une des revendications précédentes.

9. Procédé selon revendication 6,
**caractérisé en ce que**
l'oxydation sélective se fait à une température comprise entre 200 et 650°C.

10. Procédé selon revendication 7,
**caractérisé en ce que**
l'oxydation sélective se fait à une température comprise entre 400 et 500°C.
